# EUROPEAN PATENT SPECIFICATION

(11) **EP 2 464 057 B1**
(45) Date of publication and mention of the grant of the patent: **10.10.2018**
(21) Application number: 10811228.5
(22) Date of filing: 13.08.2010
(51) Int. Cl.: H04L 12/28, G06F 17/30, H04N 21/436

(54) **METHOD FOR OBTAINING SERVICE CONTENT FOR PERSONAL NETWORK EQUIPMENT**
VERFAHREN ZUM ABRUF VON DIENSTINHALTEN FÜR EINE PERSONALISIERTE NETZWERKVORRICHTUNG
PROCÉDÉ PERMETTANT À UN ÉQUIPEMENT DE RÉSEAU PERSONNEL D'ACQUÉRIR UN CONTENU DE SERVICE

(30) Priority: 27.08.2009 CN 200910090586
(43) Date of publication of application: 13.06.2012
(73) Proprietor: ZTE Corporation, Shenzhen, Guangdong 518057 (CN)
(72) Inventor: YAO, Lizhe, Shenzhen Guangdong 518057 (CN); CHEN, Jun, Shenzhen Guangdong 518057 (CN)
(74) Representative: Markfort, Iris-Anne Lucie
(86) International application number: PCT/CN2010/075995
(87) International publication number: WO 2011/023068

(56) References cited:
- EP-A1- 1 367 507
- WO-A1-2008/100078
- WO-A2-2004/095193
- CN-A- 1 551 546
- CN-A- 1 636 356
- CN-A- 1 875 575
- US-A1- 2007 081 490
- US-A1- 2008 172 458
- BRIGHT L ET AL: "Efficient remote data access in a mobile computing environment", PROCEEDONGS 2000.INTERNATIONAL WORKSHOP ON PARALLEL PROCESSING IEEE COMPUT. SOC, LOS ALAMITOS, CA, USA,2000, 21 August 2000 (2000-08-21), pages 57-64, XP010511934, DOI: 10.1109/ICPPW.2000.869088 ISBN: 978-0-7695-0771-2
- CHOW R K Y ET AL: "Scalable video delivery to unicast handheld-based clients", NETWORKS, 2000. (ICON 2000). PROCEEDINGS. IEEE INTERNATIONAL CONFERENC E ON SEPTEMBER 5-8, 2000, PISCATAWAY, NJ, USA,IEEE, 5 September 2000 (2000-09-05), pages 93-98, XP010514085, ISBN: 978-0-7695-0777-4

## Description

### TECHNICAL FIELD

The present disclosure relates to the field of data communication, and in particular to a device and a method for a personal network equipment to obtain content, and related devices.

### BACKGROUND

With the coming of 'one-person-multi-equipment' era, one user owns more and more personal equipments, such as mobile phone, laptop computer, Personal Digital Assistant (PDA), Portable Media Player (PMP), digital camera, Global Positioning System (GPS) navigator and the like, and these personal equipments have stronger and stronger capability and mostly have the capability of short distance communication, therefore people increasingly expect to connect these personal equipments together to form a personal area network, and to share resources and capabilities of these personal equipments conveniently, quickly and safely.

The document entitled "Efficient Remote Data Access in a Mobile Computing Environment" provides an on-demand approach to determine which objects to download and which to read from a cache to answer a given set of requests.

A Wireless Personal Area Network (WPAN) is just such a personal network formed by the short distance wireless communication technology, and is particularly an ad-hoc network that can perform a short distance connection between portable consumer electronic equipments and communication equipments. The WPAN is located at the bottom layer of whole network architecture and used for connection between a terminal and another terminal within a quite small range, i.e., a point-to-point short distance connection. There are many communication technologies for forming the WPAN, such as Bluetooth, IR, wireless-USB, Radio Frequency Identification (RFID) based on Near Field Communication (NFC), Zigbee and the like.

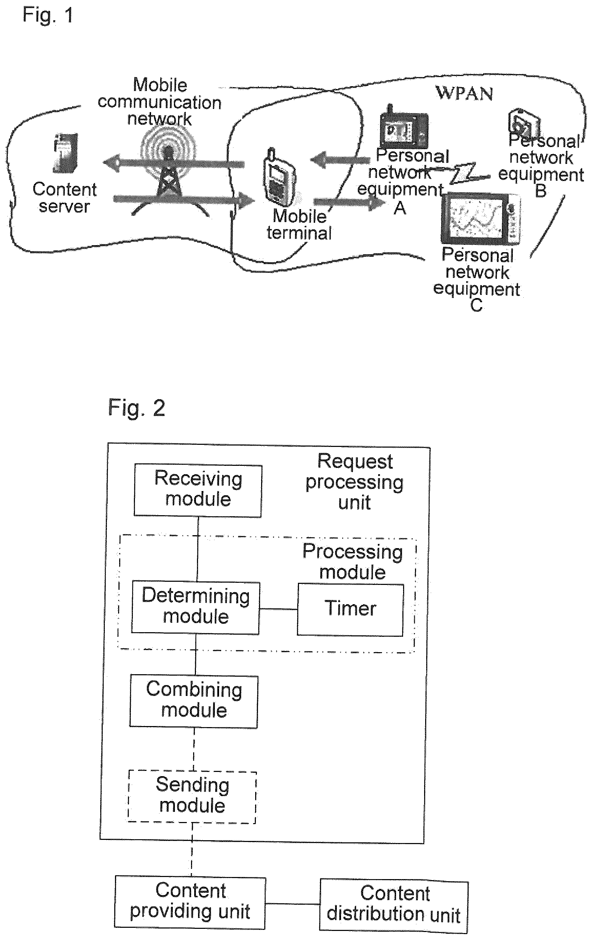

In addition to enabling personal network equipments to share data, the WPAN has another important function of, through the interaction capability of a specific equipment in the WPAN, i.e., a personal network gateway with external networks, enabling other personal network equipments to access services of external networks as well, for example, to access a mobile communication network through a mobile terminal serving as the personal network gateway, thereby downloading music and video on a content server, as shown in Fig. 1.

For personal network equipments in a same WPAN, the case occurs frequently is that multiple personal network equipments request for a same content of an external network through the personal network gateway almost simultaneously, in this case, transmission resources are inevitably wasted if the content server still sends each content for each identical request. Therefore, it is necessary to propose an effective solution of for a personal network equipment to obtain content, so as to save transmission resources.

### SUMMARY

In view of the problem above, the main purpose of the present disclosure is to provide a method per claim 1 for a personal network equipment to obtain content, and related devices, to save transmission resources effectively. Preferred embodiments are described in the dependent claims.

According to the solution of the present disclosure, the requests for the same content from multiple personal network equipments in the same WPAN within the set period of time are combined into a single request, the content is correspondingly sent one time according to the combined single request, and the requested content is distributed to each of the personal network equipments, such that the corresponding content only needs to be sent one time rather than multiple times when the multiple personal network equipments in the WPAN request the same content, thereby saving the transmission resources significantly. Since the same requests are processed in the set period of time, the real-time requirement for the personal network equipment to obtain content is basically not affected while the transmission resources are saved.

Furthermore, the request processing unit provided in the present disclosure may be located either at a personal network gateway or at a system side, which provides a flexible choice for specific applications and thus has great practicality.

### BRIEF DESCRIPTION OF THE DRAWINGS

Fig. 1 shows a schematic diagram of interaction between a WPAN and an external network;
Fig. 2 shows a structure diagram of a device for a personal network equipment to obtain content in the present disclosure;
Fig. 3 shows a first flow chart for a personal network equipment to obtain content in the present disclosure; and
Fig. 4 shows a second flow chart for a personal network equipment to obtain content in the present disclosure.

### DETAILED DESCRIPTION

In the present disclosure, requests for the same content from multiple personal network equipments in a same WPAN within a set period of time are combined into a single request, the content is correspondingly sent one time according to the combined single request, and the requested content is distributed to each of the personal network equipments. As a service may contain various different kinds of content, the content may either refer to a service requested by the personal network equipment, or refer to specific content of the service requested by the personal network equipment. The set period of time is set according to the requirement of real-time, as long as the requirement of users on real-time will not be affected.

Fig. 2 shows a structure diagram of a device for a personal network equipment to obtain content in the present disclosure, as shown in Fig. 2, the device includes: a request processing unit, a content providing unit and a content distribution unit, wherein the request processing unit is used for combining requests for the same content from multiple personal network equipments in the same WPAN within a set period of time into a single request; the content providing unit is used for correspondingly sending the content one time according to the combined single request; and the content distribution unit is used for distributing the requested content to each of the personal network equipments. The content providing unit is located at a content providing server, and the content distribution unit is located at a personal network gateway. The content providing server is a content server or a personal network service server.

The request processing unit may be located at the personal network gateway, here, the request processing unit specifically includes: a receiving module, a processing module, a combining module and a sending module, wherein the receiving module is used for receiving requests for the content from personal network equipments in one WPAN; the processing module is used for triggering the combining module when determining that the requests received by the receiving module from the multiple personal network equipments in the same WPAN within a set period of time are aimed at the same content; the combining module is used for combining all the requests for the same content from the same WPAN into a single request; and the sending module is used for sending the single request combined by the combining module to the content providing unit. Correspondingly, the content providing unit is specifically used for correspondingly sending the content one time according to the received single request; and the content distribution unit is specifically used for distributing the content provided by the content providing unit according to the requests for the content from the personal network equipments in the WPAN. The processing module is used for directly triggering the sending module when determining that there is only one request for content received by the receiving module from a personal network equipment in the WPAN; and the sending module is used for sending the request to the content providing unit.

Also, the request processing unit may be located at the system side, here, the request processing unit specifically includes: a receiving module, a processing module and a combining module, wherein the receiving module is used for receiving requests for the content from personal network equipments in one WPAN; the processing module is used for triggering the combining module when determining that the requests received by the receiving module from the multiple personal network equipments in the same WPAN within a set period of time are aimed at the same content; and the combining module is used for combining all the requests for the same content from the same WPAN into a single request and triggering the content providing unit. Correspondingly, the content providing unit is specifically used for correspondingly sending the content one time according to the combined single request; and the content distribution unit is specifically used for distributing the content provided by the content providing unit according to the requests for the content from the personal network equipments in the WPAN. The processing module is used for directly triggering the content providing unit when determining that there is only one request for content received by the receiving module from a personal network equipment in the WPAN; and the content providing unit is used for sending the content according to the request. The system side may be a content server, also may be a personal network service server, and further may be a related equipment in a transmission network, such as a related equipment in the mobile communication network as shown in Fig. 1.

The above-mentioned processing module specifically includes: a determining module and a timer, wherein
the determining module is used for recording request information of the request received by the receiving module, and determining whether the request is an initial request for the content, if so, modifying the corresponding request information and triggering the timer; if not, modifying the corresponding request information, and modifying the corresponding request information of the initial request for the same content; and the determining module is further used for triggering the combining

module when the timer reaches a set threshold; and the timer is used for timing within the set threshold according to the triggering of the determining module;
or, the timer is used for periodically timing by taking the set threshold as a timing period, that is, the timer restarts timing when reaching the set threshold; and the determining module is used for recording request information of the request received by the receiving module, and determining whether the request is an initial request for the content within a timing period of the timer, if so, modifying the corresponding request information; if not, modifying the corresponding request information, and modifying the corresponding request information of the initial request for the same content; and the determining module is further used for triggering the combining module when the timer reaches the set threshold.

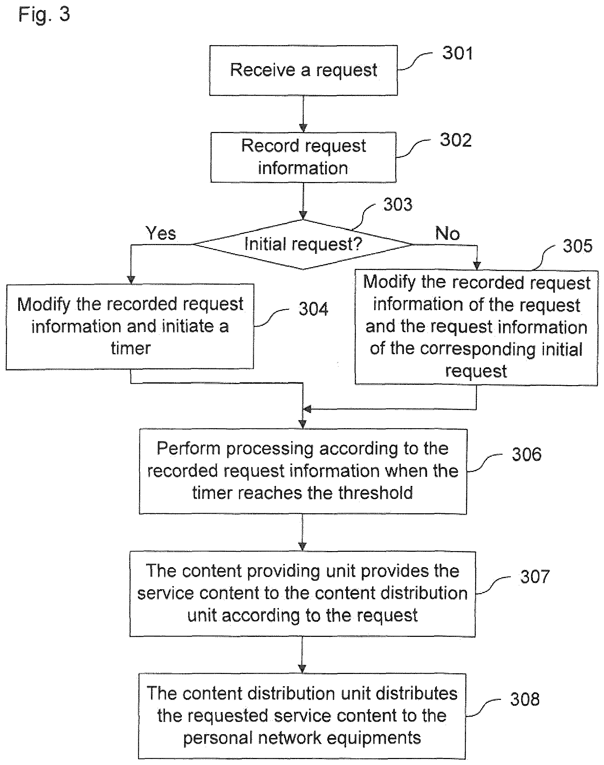

Fig. 3 shows a first flow chart for a personal network equipment to obtain content in the present disclosure, as shown in Fig. 3, the specific processing for a personal network equipment to obtain content includes the following steps.
S301-S302: the request processing unit receives a request and records the corresponding request information of the received request.
When the request processing unit is located at a personal network gateway, the corresponding request information recorded by the request processing unit for the received request is shown as the preceding four items of Table 1.

**Table 1**

| | |
|---|---|
| Request ID | Unique ID of a request, used for distinguishing from other requests in a WPAN |
| Request time | Time when a request is received |
| Requested service | Requested service ID or service ID+ content ID (one service may contain various different kinds of content, if the request only requests for a certain piece of or several pieces of content in the service, IDs of these pieces of content must also be recorded) |
| Request initiator | ID of an equipment or an application initiating the request |
| Initial request or not | Whether the request is the first request in all requests for the content |
| ID of identical requests | Unique ID of all the requests which require the same content as the initial request |

When the request processing unit is located at a system side, the corresponding request information recorded by the request processing unit for the received request is shown as the preceding four items of Table 2.

**Table 2**

| | |
|---|---|
| Request ID | Unique ID of a request, used for distinguishing different requests from one WPAN or distinguishing different requests from different WPANs |
| Request time | Time when a request is received |
| Requested service | Requested service ID or service ID+ content ID (one service may contain various different kinds of content, if the request only requests for a certain piece of or several pieces of content in the service, IDs of these pieces of content must also be recorded) |
| Request initiator | ID of a WPAN initiating the request |
| Initial request or not | Whether the request is the first request in all requests for the content |
| ID of identical requests | Unique ID of all the requests which require the same content as the initial request |

Since the last two items 'Initial request or not' and 'ID of identical requests' in Table 1 or Table 2 are determined by subsequent processing, only the preceding four items, i.e., 'Request ID', 'Request time', 'Requested service' and 'Request initiator', are recorded in the above steps.
S303: the request processing unit determines, according to the recorded request information, whether the received request is the initial request for content, i.e., the first request in all requests for the content, if so, continues to execute S304; if not, continues to execute S305.
Since the request processing unit records each received request, it is only needed to determine whether the content requested by the received request is identical to the recorded content, thereby determining whether the received request is the initial request for the content. That is, if the content requested by the received request is identical to the recorded content, the received request is not the initial request; if the content requested by the received request is not identical to all the recorded content, the received request is the initial request.
A determination of whether the content requested by the received request is identical to the recorded content can be specifically realized through comparison of service IDs or service IDs+ content IDs in Table 1 or Table 2, if the service IDs or the service IDs+ content IDs are consistent, the received request is not the initial request; if the service IDs or the service IDs+ content IDs are not consistent, the received request is the initial request.
S304: the request processing unit modifies the corresponding recorded request information and initiates the timer to begin timing, S306 is executed when the timer reaches a set threshold.
Here, the operation of modifying the corresponding recorded request information specifically means recording 'Initial request or not' in Table 1 or Table 2, that is, 'Initial request or not' is set to 'Yes'. Since the received request is the initial request here, which indicates that no other request for the same content has been received, the last item 'ID of identical requests' in the table is not recorded. Through 'ID of identical requests', the number of requests for the same content can be shown.
When the timer does not reach the set threshold, if the request processing unit receives a new request, it repeats S301-S303.
S305: the request processing unit modifies the corresponding recorded request information and modifies the corresponding request information of the initial request for the same content, and S306 is executed when the timer corresponding to the initial request for the same content reaches the set threshold.
Here, the operation of modifying the recorded corresponding request information specifically means recording 'Initial request or not' in Table 1 or Table 2, that is, 'Initial request or not' is set to 'No'. Since the received request is not initial request here, which indicates that other requests for the same content have been received, the request ID of the currently received request must be recorded in the last item 'ID of identical requests' of the corresponding request information table corresponding to the initial request.
S306: when the timer corresponding to the initial request reaches the set threshold, the request processing unit performs processing according to the recorded request information of the initial request, if there are requests which require the same content as the initial request, it combines the requests into a single request; if there is no request which requires the same content as the initial request, it does not perform a combination.
It can be seen from the descriptions of S301-S306 that, the request processing unit will set a timer for the initial request for content, when the timer does not reach the set threshold, the request processing unit records the received request which requires the same content as the initial request, thereby enabling to uniformly process requests for the same content. The set thresholds of the timer corresponding to different initial requests may be identical, and also may be different.
S307-S308: the content providing unit provides the content to the content distribution unit according to the request; and the content distribution unit distributes the requested content to the personal network equipments.

When the request processing unit is located at the personal network gateway, the combined request is sent to the content providing unit. Since the content providing unit receives only one request, it inevitably sends the corresponding content one time. Since the content distribution unit is located at the personal network gateway, and the request processing unit is also located at the personal network gateway, the content distribution unit may determine, according to the request information of the initial request and the request information of other requests for the same content recorded in the request processing unit, each request for the same content, then determine the corresponding personal network equipments sending the requests, and distributes the content provided by the content providing unit to each of the personal network equipments. After the distribution of the content is finished, the request processing unit can delete the recorded request information immediately, or also can store the recorded request information for a period of time to facilitate subsequent information interaction, such as interaction among a personal network equipment, a personal network gateway and a system side, and then deletes it.

When the request processing unit is located at the system side, although the personal network gateway will not record the request information of each request for the same content according to the initial request, it will record the content requested by each of the personal network equipments, as a result, the content distribution unit also can determine each of personal network equipments requesting for the content provided by the content providing unit, and then distribute the content to each of the personal network equipments. After the content is sent to the personal network equipments, the request processing unit can delete the recorded request information immediately, or delete it after storing the recorded request information for a period of time.

Since the case where there is only one request for content is completely identical to the existing processing, it will not be described here.

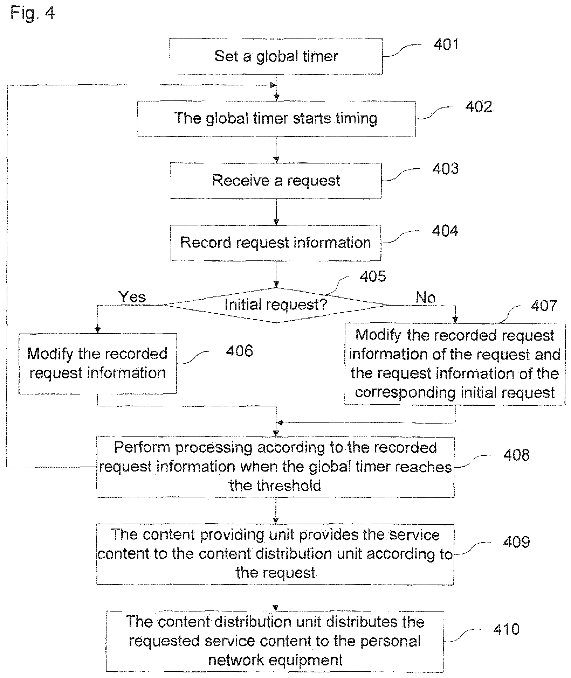

Fig. 4 shows a second flow chart for a personal network equipment to obtain content in the present disclosure, as shown in Fig. 4, the specific processing for a personal network equipment to obtain content includes the following steps.
S401: the request processing unit sets a global timer.
   The global timer will take a set threshold as a timing period to perform a periodical timing, that is, the global timer will restart timing when reaching the set threshold. Within each timing period of the global timer, the request processing unit processes requests for the same content.
S402: the global timer is initiated and starts timing periodically.
S403-S405 are basically identical to S301-S303, which will not be described here.
S406: the request processing unit modifies the recorded corresponding request information, and executes S408 when the global timer reaches the set threshold, that is, when one timing period ends.
   When the global timer does not reach the set threshold, that is, when one timing period does not end, if the request processing unit receives a new request, it repeats S403-S405.
S407: the request processing unit modifies the recorded corresponding request information, and modifies the corresponding request information of the initial request for the same content, and when the global timer reaches the set threshold, that is, when one timing period ends, S408 is executed.
S408: when the global timer reaches the set threshold, the request processing unit performs processing according to the recorded request information of the initial request, if there are requests which require the same content as the initial request, it combines the requests into a single request; if there is no request which requires the same content as the initial request, it does not perform a combination. Then, the process returns to S402 to restart timing, and S409 is executed.
S409-S410 are basically identical to S308-S309, which will not be described here.

The specific implementation of the present disclosure will be further described in details through the following specific examples.

### Example 1

Personal network equipments A, B and C as shown in Fig. 1 and a mobile terminal serving as a personal network gateway form a WPAN, and the personal network equipments A, B and C access a content server of an external network through the mobile terminal, so as to obtain content. In this example, the request processing unit is arranged in the personal network gateway.

When the personal network equipment A wants to watch video program 1, the personal network equipment A sends a request of watching the video program 1 to the personal network gateway. The request processing unit in the personal network gateway receives the request sent from the personal network equipment A, and creates a request information table for the request, which specifically includes the following information:

| Request ID | 0001 |
|---|---|
| Request time | 2009-6-10 T08:15:30.000+08:00 |
| Requested service | App001 |
| Request initiator | Device A |
| Initial request or not | N/A |
| ID of identical requests | N/A |

Then, the request processing unit determines that the request is the first request for the video program 1 according to the recorded request information, i.e., an initial request, sets the field 'Initial request or not' to 1 (wherein 1 indicates that the request is an initial request, and 0 indicates that the request is not the initial request), and sets a timer T(2009-6-10 T08:15:30.050+08:00, 200) for the request, indicating that the timer times from 2009-6-10 T08:15:30.050+08:00 with a timing duration 200 milliseconds. Since it is necessary to record the request information of the request after the request is received, it is conceivable that the timer may be delayed for 50 milliseconds appropriately, from that time the timer begins timing. Here, the request information table of the request is as follows:

| Request ID | 0001 |
|---|---|
| Request time | 2009-6-10 T08:15:30.000+08:00 |
| Requested service | App001 |
| Request initiator | Device A |
| Initial request or not | 1 |
| ID of identical requests | N/A |

Within the timing period of the timer, the personal network equipment B also sends a request of watching the video program 1 to the personal network gateway. The request processing unit in the personal network gateway receives the request sent from the personal network equipment B, and creates a request information table for the request, which specifically includes the following information:

| Request ID | 0002 |
|---|---|
| Request time | 2009-6-10 T08:15:30.100+08:00 |
| Requested service | App001 |
| Request initiator | Device B |
| Initial request or not | N/A |
| ID of identical requests | N/A |

Then, the request processing unit determines that the request is the same as the request sent from the personal network equipment A according to the recorded request information, and the timer corresponding to request 0001 does not reach a set threshold, therefore the request is not an initial request, and the request processing unit modifies the information table of the request 0001 as follows:

| Request ID | 0001 |
|---|---|
| Request time | 2009-6-10 T08:15:30.000+08:00 |
| Requested service | App001 |
| Request initiator | Device A |
| Initial request or not | 1 |
| ID of identical requests | 0002 |

The request processing unit modifies the information table of request 0002 as follows:

| Request ID | 0002 |
|---|---|
| Request time | 2009-6-10 T08:15:30.100+08:00 |
| Requested service | App001 |
| Request initiator | Device B |
| Initial request or not | 0 |
| ID of identical requests | N/A |

When the moment 2009-6-10 T08:15:30.250+08:00 is reached, the timer corresponding to the request 0001 reaches the set threshold, the request 0001 and the request 0002 are combined to a new single request according to content recorded in the field 'ID of identical requests' in the request information table of the request 0001, and the new single request is sent to the content server.

The content server sends the video program 1 one time to the personal network gateway according to the received single request. After the personal network gateway receives the video program 1, the content distribution unit respectively distributes the video program 1 to the personal network equipments A and B according to the request information of both the request 0001 and the request 0002 recorded in the request processing unit.

### Example 2

Personal network equipments A, B and C as shown in Fig. 1 and a mobile terminal serving as the personal network gateway form a WPAN, and the personal network equipments A, B and C access a content server of an external network through the mobile terminal, so as to obtain content. In this example, the request processing unit is arranged at a system side.

When the personal network equipment A wants to watch video program 1, the personal network equipment A sends a request of watching the video program 1 through the personal network gateway. The request processing unit at the system side receives the request sent from the personal network gateway, and creates a request information table for the request, which specifically includes the following information:

| Request ID | 0001 |
|---|---|
| Request time | 2009-6-10 T08:15:30.000+08:00 |
| Requested service | App001 |
| Request initiator | PN0001 |
| Initial request or not | N/A |
| ID of identical requests | N/A |

Then, the request processing unit determines that the request is the first request for the video program 1 according to the recorded request information, i.e., an initial request, sets the field 'Initial request or not' to 1 (wherein 1 indicates that the request is an initial request, and 0 indicates that the request is not the initial request), and sets a timer T(2009-6-10 T08:15:30.050+08:00, 200) for the request, indicating that the timer times from 2009-6-10 T08:15:30.050+08:00 with a timing duration 200 milliseconds. Here, the request information table of the request is as follows:

| Request ID | 0001 |
|---|---|
| Request time | 2009-6-10 T08:15:30.000+08:00 |
| Requested service | App001 |
| Request initiator | PN0001 |
| Initial request or not | 1 |
| ID of identical requests | N/A |

Within the timing period of the timer, the personal network equipment B also sends a request of watching the video program 1 through the personal network gateway. The request processing unit at the system side receives the request sent from the personal network gateway, and creates a request information table for the request, which specifically includes the following information:

| Request ID | 0002 |
|---|---|
| Request time | 2009-6-10 T08:15:30.100+08:00 |
| Requested service | App001 |
| Request initiator | PN0001 |
| Initial request or not | N/A |
| ID of identical requests | N/A |

Then, the request processing unit determines that the request is the same as the request sent from the personal network equipment A according to the recorded request information, and the timer corresponding to request 0001 does not reach a set threshold, therefore the request is not the initial request, and the request processing unit modifies the information table of the request 0001 as follows:

| Request ID | 0001 |
|---|---|
| Request time | 2009-6-10 T08:15:30.000+08:00 |
| Requested service | App001 |
| Request initiator | PN0001 |
| Initial request or not | 1 |
| ID of identical requests | 0002 |

The request processing unit modifies the information table of request 0002 as follows:

| Request ID | 0002 |
|---|---|
| Request time | 2009-6-10 T08:15:30.100+08:00 |
| Requested service | App001 |
| Request initiator | PN0001 |
| Initial request or not | 0 |
| ID of identical requests | N/A |

When the moment 2009-6-10 T08:15:30.250+08:00 is reached, the timer corresponding to the request 0001 reaches the set threshold, the request 0001 and the request 0002 are combined to a new single request according to content recorded in the field 'ID of identical requests' in the request information table of the request 0001, and the new single request is sent to the content server.

The content server sends the video program 1 one time to the personal network gateway according to the combined single request. After the personal network gateway receives the video program 1, the content distribution unit respectively distributes the video program 1 to the personal network equipments A and B according to the recorded content requested by the personal network equipments.

In addition, after the timer corresponding to the request 0001 reaches the set threshold, the personal network equipment C also sends a request of watching the video program 1 through the personal network gateway. The request processing unit at the system side receives the request sent from the personal network gateway, and creates a request information table for the request, which specifically includes the following information:

| Request ID | 0003 |
|---|---|
| Request time | 2009-6-10 T08:15:30.300+08:00 |
| Requested service | App001 |
| Request initiator | PN0001 |
| Initial request or not | N/A |
| ID of identical requests | N/A |

Since the timer corresponding to the request 0001 has reached the set threshold, at this moment, there is no corresponding initial request, the request processing unit determines that the request is the first request for the video program 1 according to the recorded request information, i.e., the initial request, sets the field 'Initial request or not' to 1 (wherein 1 indicates that the request is an initial request, and 0 indicates that the request is not the initial request), and sets a timer T(2009-6-10 T08:15:30.350+08:00, 500) for the request, indicating that the timer times from 2009-6-10 T08:15:30.350+08:00 with a timing duration 500 milliseconds. Here, the request information table of the request is as follows:

| Request ID | 0003 |
|---|---|
| Request time | 2009-6-10 T08:15:30.300+08:00 |
| Requested service | App001 |
| Request initiator | PN0001 |
| Initial request or not | 1 |
| ID of identical requests | N/A |

Of course, the timing duration may also be set as 200 milliseconds. The subsequent processing is completely identical to the aforementioned description, therefore it is not described here again.

### Example 3

Personal network equipments A, B and C as shown in Fig. 1 and a mobile terminal serving as the personal network gateway form a WPAN, and the personal network equipments A, B and C access a content server of an external network through the mobile terminal, so as to obtain content. In this example, the request processing unit is arranged in the personal network gateway. Moreover, in this example, a global timer is set, the global timer starts timing from 2009-6-10 T08:15:30.000+08:00, and a set threshold is set, i.e., the timing period length is 300 milliseconds.

When the personal network equipment A wants to watch video program 1 of English version, the personal network equipment A sends a request of watching the video program 1 of English version to the personal network gateway. The request processing unit in the personal network gateway receives the request sent from the personal network equipment A, and creates a request information table for the request, which specifically includes the following information:

| Request ID | 0001 |
|---|---|
| Request time | 2009-6-10 T08:15:30.100+08:00 |
| Requested service | App001_en |
| Request initiator | Device A |
| Initial request or not | N/A |
| ID of identical requests | N/A |

Then, the request processing unit determines that the request is the first request for the video program 1 of English version according to the recorded request information, and i.e., an initial request, and sets the field 'Initial request or not' to 1 (wherein 1 indicates that the request is an initial request, and 0 indicates that the request is not the initial request).

Here, the request information table of the request is as follows:

| Request ID | 0001 |
|---|---|
| Request time | 2009-6-10 T08:15:30.100+08:00 |
| Requested service | App001_en |
| Request initiator | Device A |
| Initial request or not | 1 |
| ID of identical requests | N/A |

Within one timing period of the global timer, the personal network equipment B also sends a request of watching the video program 1 of English version to the personal network gateway. The request processing unit in the personal network gateway receives the request from the personal network equipment B, and creates a request information table for the request, which specifically includes the following information:

| Request ID | 0002 |
|---|---|
| Request time | 2009-6-10 T08:15:30.150+08:00 |
| Requested service | App001_en |
| Request initiator | Device B |
| Initial request or not | N/A |
| ID of identical requests | N/A |

Then, the request processing unit determines that the request is the same as the request sent from the personal network equipment A according to the recorded request information, and one timing period of the global timer does not end, therefore the request is not the initial request, and the request processing unit modifies the information table of request 0001 as follows:

| Request ID | 0001 |
|---|---|
| Request time | 2009-6-10 T08:15:30.100+08:00 |
| Requested service | App001_en |
| Request initiator | Device A |
| Initial request or not | 1 |
| ID of identical requests | 0002 |

The request processing unit modifies the information table of request 0002 as follows:

| Request ID | 0002 |
|---|---|
| Request time | 2009-6-10 T08:15:30.150+08:00 |
| Requested service | App001_en |
| Request initiator | Device B |
| Initial request or not | 0 |
| ID of identical requests | N/A |

When the moment 2009-6-10 T08:15:30.300+08:00 is reached, the global timer reaches the set threshold, that is, one timing period ends, the request 0001 and the request 0002 are combined to a new single request according to content recorded in the field 'ID of identical requests' in the request information table of the request 0001, and the new single request is sent to the content server.

The content server sends the video program 1 of English version one time to the personal network gateway according to the combined single request. After the personal network gateway receives the video program 1, the content distribution unit respectively distributes f the video program 1 of English version to the personal network equipments A and B according to the recorded content requested by the personal network equipments A and B.

Within another timing period of the global timer, the personal network equipment C also sends a request of watching the video program 1 of English version to the personal network gateway. The request processing unit receives the request sent from the personal network gateway, and creates a request information table for the request, which specifically includes the followin information:

| Request ID | 0003 |
|---|---|
| Request time | 2009-6-10 T08:15:30.500+08:00 |
| Requested service | App001_en |
| Request initiator | Device C |
| Initial request or not | N/A |
| ID of identical requests | N/A |

Since it is within another timing period of the global timer currently, here, there is no corresponding initial request, the request processing unit determines that the request is the first request for the video program 1 of English version according to the recorded request information, i.e., the initial request, and sets the field 'Initial request or not' to 1. Here, the request information table of the request is as follows:

| Request ID | 0003 |
|---|---|
| Request time | 2009-6-10 T08:15:30.500+08:00 |
| Requested service | App001_en |
| Request initiator | Device C |
| Initial request or not | 1 |

| | |
|---|---|
| ID of identical requests | N/A |

If there is no same request within this timing period of the global timer, no combination is executed.

According to the above descriptions, when the request processing unit is located at a personal network gateway, the present disclosure further discloses a personal network gateway, which includes: a request processing unit and a content distribution unit, wherein the request processing unit is used for combining requests for same content from multiple personal network equipments in a WPAN within a set period of time into a single request; and the content distribution unit is used for receiving the content and distributing the requested content to each of the personal network equipments. Specific implementations of the related components are completely identical to the above descriptions and will not be described in details here.

When the request processing unit is located at a system side, the present disclosure further discloses a server, which includes: a request processing unit and a content providing unit, wherein the request processing unit is used for combining requests for the same content from multiple personal network equipments in a WPAN within a set period of time into a single request; and the content providing unit is used for correspondingly sending the content one time according to the combined signal request. Specific implementations of the related components are completely identical to the above descriptions and will not be described in details here.

The above descriptions are preferred embodiments of the present disclosure and are not intended to limit the scope of protection of the present disclosure.

## Claims

1. A method for a personal network equipment to obtain content, comprising:
combining requests for same content from multiple personal network equipments in a same Wireless Personal Area Network WPAN within a set period of time into a single request;
correspondingly sending, by a content providing unit, the content one time according to the combined single request; and
distributing, by a content distribution unit, the requested content provided by the content providing unit to each of the personal network equipments;
wherein the step of combining the requests for the same content from the multiple personal network equipments in the same WPAN within the set period of time into the single request comprises:
recording request information of a received request, determining whether the request is an initial request for the content, if so, modifying the corresponding request information and starting a timer to time; if not, modifying the corresponding request information, and modifying the corresponding request information of the initial request for the same content; and
combining the requests for the same content into the single request when the timer reaches a set threshold;
wherein the step of distributing the requested content to each of the personal network equipment comprises:
according to recorded request information of an initial request and recorded request information of other requests which require the same content as the initial request, determining each request for the same content, and then determining the corresponding personal network equipment sending the request, and finally distributing the content provided by a content providing unit to each of the personal network equipment.

2. The method according to claim 1, wherein the step of combining the requests for the same content from the multiple personal network equipments in the same WPAN within the set period of time into the single request comprises:
recording request information of a received request, determining whether the request is an initial request for the content within one timing period of a timer, if so, modifying the corresponding request information; if not, modifying the corresponding request information, and modifying the corresponding request information of the initial request for the same content; and
combining the requests for the same content into the single request and enabling the timer to re-time when the timer reaches a set threshold.

3. The method according to claim 1, wherein the step of determining whether the request is the initial request comprises: determining whether the content requested by a received request is identical to recorded content, if so, the received request is not the initial request; if not, the received request is the initial request.

4. The method according to claim 1 or 2, wherein the request information comprises: request ID, request time, requested service, request initiator, initial request or not, and ID of identical requests.

5. The method according to any one of claims 1-3, when there is only one request for the content within the set period of time, the method further comprises:
directly sending the request;
providing the corresponding content according to the request; and
sending the content to the personal network equipment sending the request.

6. The method according to claim 1, wherein the content distribution unit is located at the personal network gateway of the WPAN.

## Patentansprüche

1. Verfahren zum Abruf von Dienstinhalten für eine personalisierte Netzwerkvorrichtung aufweisend:
Kombinieren von Anfragen des selben Inhalts von einer Vielzahl personalisierter Netzwerkvorrichtungen in einem gemeinsamen Wireless Personal Area Network (WPAN) innerhalb einer vorgegebenen Zeitdauer in eine einzelne Anfrage;
entsprechendes einmaliges Senden, mittels einer Inhalt zur Verfügung stellenden Einheit, des Inhalts gemäß der kombinierten einzelnen Anfrage; und
Verteilen, mittels einer Inhaltsverteilungs-Einheit, des angefragten Inhalts, der von der Inhalt zur Verfügung stellenden Einheit an jede der personalisierten Netzwerkvorrichtungen bereitgestellt wurde;
wobei der Schritt Kombinieren von Anfragen des selben Inhalts von einer Vielzahl personalisierter Netzwerkvorrichtungen in einem gemeinsamen Wireless Personal Area Network (WPAN) innerhalb einer vorgegebenen Zeitdauer in eine einzelne Anfrage aufweist:
Aufnehmen von Anfrage-Informationen einer erhaltenen Anfrage, Bestimmen, ob die Anfrage eine Erstanfrage für den Inhalt ist, falls ja, Anpassen der entsprechenden Anfrage-Information und Starten eines Zeitmessers , um die Zeit zu messen; falls nein, Anpassen der entsprechenden Anfrage-Information und
Anpassen der entsprechenden Anfrage-Information der Erstanfrage für den selben Inhalt; und
Kombinieren der Anfragen des selben Inhalts in eine einzige Anfrage, wenn der Zeitmesser einen vorgegebenen Schwellenwert erreicht;
wobei der Schritt Verteilen des angefragten Inhalts an jede der personalisierten Netzwerkvorrichtungen aufweist:
gemäß der aufgenommenen Anfrage-Informationen einer Erstanfrage gemäß der aufgenommenen Anfrage-Informationenanderer Anfragen, die den selben Inhalt anfragen wie die Erstanfrage, Bestimmen jeder Anfrage für den selben Inhalt, und dann Bestimmen der entsprechenden personalisierten Netzwerkvorrichtung, die die Anfrage sendet, und schließlich Verteilen des Inhalts, der mittels einer Inhaltsverteilungs-Einheit an jede personalisierte Netzwerkvorrichtung bereitgestellt wurde.

2. Verfahren nach Anspruch 1, wobei der Schritt Kombinieren der Anfragen des selben Inhalts von einer Vielzahl personalisierter Netzwerkvorrichtungen in einem gemeinsamen Wireless Personal Area Network (WPAN) innerhalb einer vorgegebenen Zeitdauer in eine einzelne Anfrage aufweist:
Aufnehmen von Anfrage-Informationen einer erhaltenen Anfrage, Bestimmen, ob die Anfrage eine Erstanfrage für den Inhalt ist, falls ja, Anpassen der entsprechenden Anfrage-Information; falls nein, Anpassen der entsprechenden Anfrage-Information und Anpassen der entsprechenden Anfrage-Information der Erstanfrage für den selben Inhalt; und
Kombinieren der Anfragen des selben Inhalts in eine einzige Anfrage, und Ermöglichen, dass der Zeitmesser, die Zeit erneut misst, wenn der Zeitmesser einen vorgegebenen Schwellenwert erreicht.

3. Verfahren nach Anspruch 1, wobei der Schritt Bestimmen, ob die Anfrage eine Erstanfrage für den Inhalt ist, aufweist: Bestimmen, ob der angefragte Inhalt, der von einer erhaltenen Anfrage angefragt wurde, identisch mit der ursprünglichen Anfrage ist, und Identifizieren von identischen Anfragen.

4. Verfahren nach Anspruch 1 oder 2, wobei die Anfrage-Informationen aufweisen:
Anfrage ID, Anfrage-Zeit, angefragter Dienst, Anfrage-Initiator, Erstanfrage oder nicht, und ID identischer Anfragen.

5. Verfahren nach einem der Ansprüche 1 bis 3, wobei das Verfahren dann, wenn es nur eine einzige Anfrage innerhalb der gesetzten Zeitdauer gibt, ferner aufweist:
direktes Senden der Anfrage;
Bereitstellen des entsprechenden Inhalts gemäß der Anfrage; und
Senden des Inhalts an die personalisierte Netzwerkvorrichtung, die die Anfrage gesendet hat.

6. Verfahren nach Anspruch 1, wobei die Inhalt zur Verfügung stellende Einheit an dem persönlichen Netzwerkzugang des WPAN angeordnet ist.

## Revendications

1. Procédé permettant à un équipement de réseau personnel d'acquérir un contenu, comprenant :
la combinaison de requêtes de contenu identique provenant de multiples équipements de réseau personnel dans un même réseau local personnel sans fil WPAN, dans un intervalle de temps défini, en une seule requête ;
l'envoi correspondant, par une unité de distribution de contenu, en une fois, du contenu selon la requête unique combinée ; et
la distribution, par une unité de distribution de contenu, du contenu requis fourni par l'unité de distribution de contenu à chacun des équipements de réseau personnel ;
dans lequel l'étape de combinaison des requêtes de contenu identique provenant de multiples équipements de réseau personnel dans le même WPAN dans un intervalle de temps défini, en une seule requête comprend :
l'enregistrement des informations de requête d'une requête reçue, la détermination si la requête est une requête initiale pour le contenu, si c'est le cas, la modification des informations de requête correspondantes et le démarrage d'un minuteur ; si ce n'est pas le cas, la modification des informations de requête correspondantes, et la modification des informations de requête correspondantes de la requête initiale pour le même contenu ; et
la combinaison des requêtes pour le même contenu dans la requête unique lorsque le minuteur atteint un seuil déterminé ;
dans lequel l'étape de distribution du contenu requis à chacun des équipements de réseau personnel comprend:
en fonction des informations de requête enregistrées d'une requête initiale et des informations de requête enregistrées d'autres requêtes qui revendiquent le même contenu que la requête initiale, la détermination de chaque requête pour le même contenu, et ensuite la détermination de l'équipement de réseau personnel correspondant envoyant la requête, et finalement la distribution du contenu fourni par une unité de distribution de contenu à chacun des équipements de réseau personnel.

2. Procédé selon la revendication 1, dans lequel l'étape de combinaison des requêtes de contenu identique provenant de multiples équipements de réseaux personnels dans le même WPAN dans un intervalle de temps défini, en une seule requête comprend :
l'enregistrement des informations de requête d'une requête reçue, la détermination si la requête est une requête initiale pour le contenu, pendant un délai du minuteur, si c'est le cas, la modification des informations de requête correspondantes ; si ce n'est pas le cas, la modification des informations de requête correspondantes, et la modification des informations de requêtes correspondantes de la requête initiale pour le même contenu ; et
la combinaison des requêtes pour le même contenu en une requête unique et la permission au minuteur de se réactiver lorsque le minuteur atteint un seuil déterminé.

3. Procédé selon la revendication 1, dans lequel l'étape de détermination si la requête est la requête initiale comprend : la détermination si le contenu requis par une requête reçue est identique au contenu enregistré, si c'est le cas, la requête reçue n'est pas la requête initiale ; si ce n'est pas le cas, la requête reçue est la requête initiale.

4. Procédé selon les revendications 1 ou 2, dans lequel les informations de requête comprennent : la requête ID, la requête du temps, le service requis, la requête de l'initiateur, la requête initiale ou non, et ID des requêtes identiques.

5. Procédé selon l'une quelconque des revendications 1-3, lorsqu'il n'y a qu'une seule requête pour le contenu pendant la période de temps déterminé, le procédé comprend en outre :
l'envoi direct de la requête ;
la détermination prouvant que le contenu correspond à la requête, et
la distribution du contenu correspondant en fonction de la requête ; et
l'envoi du contenu à l'équipement de réseau personnel envoyant la requête.

6. Procédé selon la revendication 1, dans lequel l'unité de distribution de contenu est localisée à la passerelle du réseau personnel du WPAN.
